(19) Europäisches Patentamt
European Patent Office
Office européen des brevets

(11) Veröffentlichungsnummer: **0 065 725**
**A1**

# (12) EUROPÄISCHE PATENTANMELDUNG

(21) Anmeldenummer: 82104262.9

(22) Anmeldetag: 15.05.82

(51) Int. Cl.³: **A 01 N 49/00**

(30) Priorität: 25.05.81 DE 3120805

(43) Veröffentlichungstag der Anmeldung: 01.12.82 Patentblatt 82/48

(84) Benannte Vertragsstaaten: AT BE CH DE FR GB IT LI NL

(71) Anmelder: BASF Aktiengesellschaft
Carl-Bosch-Strasse 38
D-6700 Ludwigshafen(DE)

(72) Erfinder: Juettner, Friedrich, Dr.
Hausserstrasse 140
D-7400 Tuebingen(DE)

## (54) Mittel und Verfahren zur Bekämpfung von Blaualgen.

(57) Die vorliegende Erfindung betrifft Mittel zur Bekämpfung von Blaualgen, enthaltend eine Verbindung der Formel

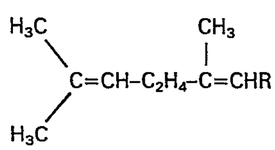

in der R einen Alkenylrest mit 3 bis 9 Kohlenstoffatomen bedeutet, der 1 bis 3 Doppelbindungen enthält und ein- bis dreifach durch einen Methylrest und durch eine Hydroxygruppe oder eine Acetylgruppe substituiert ist, oder die Derivate dieser Verbindung und Verfahren zur Bekämpfung von Blaualgen mit diesen Wirkstoffen.

EP 0 065 725 A1

Croydon Printing Company Ltd.

# Mittel und Verfahren zur Bekämpfung von Blaualgen

Die vorliegende Erfindung betrifft ein Mittel und Verfahren zur Bekämpfung von Blaualgen mit Hilfe von ungesättigten Alkoholen oder Ketonen oder deren Derivaten.

Es ist bekannt, daß Blaualgen Wasser, insbesondere Trinkwasser, verunreinigen. Sie scheiden zum Teil giftige Verbindungen, d.h. Toxine ab, oder aber sie beeinträchtigen den Geschmack und Geruch des Trinkwassers, so daß dieses Trinkwasser ungenießbar für Mensch und Tier wird.

Es wurde nun gefunden, daß Verbindungen der Formel

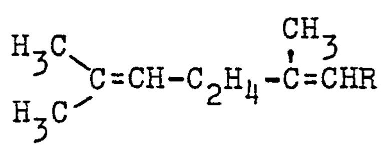

in der R einen Alkenylrest mit 3 bis 9 Kohlenstoffatomen bedeutet, der 1 bis 3 Doppelbindungen enthält und ein- bis dreifach durch einen Methylrest und durch eine Hydroxygruppe oder eine Aldehydgruppe $(-\underset{CH_3}{C}=O)$ substituiert ist, oder die Derivate dieser Verbindung zur Bekämpfung von Blaualgen in Wasser, insbesondere in Trinkwasser, geeignet sind. Unter Blaualgen verstehen wir beispielsweise

Synechococcus spec.
Aphanocapsa littoralis
Chroococcus turgidus
Gloeocapsa conglomerata
Microcystis aeruginosa
Microcystis wesenbergii
Oscillatoria curviceps
Oscillatoria tenuis

Mu/P

Phormidium retzii
Lyngbya aestuarii
Nostoc commune
Anabaena circinalis
Aphanizomenon flos-aquae
Rivularia dura
Spirulina subsalsa
Arthospira jenneri
Anacystis cyanea

Diese Blaualgen scheiden zum Teil Toxine in das Trinkwasser aus oder aber sie verunreinigen es so stark, daß Geschmack und Geruch des Wassers beeinträchtigt sind, so daß es ungenießbar wird für Mensch und Tier. Insbesondere Wasser, das zum Tränken von Tieren bestimmt ist, wird durch Befall mit Blaualgen unbrauchbar, so daß die Tiere nicht mehr getränkt werden können.

Fische, die in Wasser leben, in dem Blaualgen wachsen, nehmen einen moderigen Geruch und Geschmack an und sind für die menschliche Ernährung kaum noch geeignet. Auch Wasser von Aquarien, in denen Zierfische leben, wird häufig durch Blaualgen verunreinigt.

In der Teichwirtschaft wird zur Steigerung des Wachstums der Nutzfische regelmäßig das Teichwasser gedüngt. In solchem Wasser entwickeln sich häufig Blaualgen. Hierdurch wird das Wachstum der Fischfuttertiere beeinträchtigt.

Unter Derivaten verstehen wir beispielsweise die Ester der Alkohole, beispielsweise die Ester mit Essigsäure oder Palmitinsäure oder die Oxime der Ketone.

Die Behandlung des Wassers erfolgt in der Weise, daß die Wirkstoffe dem Wasser zugesetzt und in diesem fein verteilt werden. Die Konzentrationen der Wirkstoffe im Wasser betragen beispielsweise 2 ppm (Teile Wirkstoff/Million Teile Wasser) bis 50 ppm. Die Wirkstoffe werden beispielsweise in Form von Lösungen in organischen Lösungsmitteln oder in Form von Granulaten, beispielsweise in Form von Granulaten, die auf dem Wasser schwimmen, verwendet. Die Verbindungen sind in höheren Konzentrationen im Wasser nicht oder nur schlecht löslich während sie in den minimalen Konzentrationen, die für die Bekämpfung der Blaualgen notwendig sind, ohne weiteres in Wasser löslich sind. Als Wirkstoffe werden beispielsweise genannt:

3,7,11-Trimethyl-2,8,10-dodecatrien-1-ol (Farnesol), 3,7,11-Trimethyl-1,6,10-dodecatrien-3-ol (Nerolidol), 6,10,14-Trimethyl-5,9,13-pentadecatrien-2-on (Farnesylaceton), Geranyloxypropionitril, Farnesylacetat, Geranyllinalool, Citronellol, cis-Dihydromyrcen, Geraniol, Methylgeraniat, Citral, Pseudoionon.

Die Wirkstoffe können in die üblichen Formulierungen übergeführt werden, wie Lösungen, Emulsionen, Suspensionen, Stäube, Pulver und Granulate. Die Anwendungsformen richten sich ganz nach den Verwendungszwecken; sie sollen in jedem Fall eine feine und gleichmäßige Verteilung der wirksamen Substanzen gewährleisten. Die Formulierungen werden in bekannter Weise hergestellt, z.B. durch Verstrecken des Wirkstoffs mit Lösungsmitteln und/oder Trägerstoffen, gegebenenfalls unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage: Lösungsmittel wie Aromaten (z.B. Xylol, Benzol), chlo-

rierte Aromaten (z.B. Chlorbenzole), Paraffine (z.B. Erdölfraktionen), Alkohole (z.B. Methanol, Butanol), Amine oder Amide (z.B. Ethanolamin, Dimethylformamid) und Wasser; Trägerstoffe wie natürliche Gesteinsmehle, z.B. Kaoline, Tonerden, Talkum, Kreide und synthetische Gesteinsmehle (z.B. hochdisperse Kieselsäure, Silikate); Emulgiermittel, wie nichtionogene und anionische Emulgatoren (z.B. Polyoxyethylen - Fettalkohole - Ether, Alkylsulfonate und Arylsulfonate) und Dispergiermittel, wie Lignin, Sulfitablaugen und Methylcellulose.

Die Mittel enthalten 0,1 bis 95 Gew.% Wirkstoff, vorzugsweise 0,5 bis 90 Gew.%.

Die Mittel bzw. die daraus hergestellten gebrauchsfertigen Zubereitungen, wie Lösungen, Emulsionen, Suspensionen, Pulver, Stäube oder Granulate werden in bekannter Weise angewendet, beispielsweise durch Versprühen, Vernebeln, Verstäuben, Verstreuen oder Gießen.

Die folgenden Beispiele erläutern die Wirkung der Wirkstoffe gegenüber Blaualgen, wobei als Prüforganismus die Alge Synechococcus verwendet wurde. Die Verbindungen enthalten mindestens ein asymmetrisches Kohlenstoffatom, so daß sie optische Isomere bilden. Es können sowohl die Mischungen der Isomeren (Racemate) als auch die einzelnen optischen Isomeren verwendet werden.

Beispiel 1

Zur Ermittlung der Wirkstoffkonzentration, die erforderlich ist, um die Entwicklung (Vermehrung) der Blaualge Synechococcus Stamm 6911 (Herkunft Institut Pasteur, Paris) zu hemmen, werden zu je 100 ml einer synthetischen Nährlösung mit Zusatz von $NaHCO_3$ (Zusammensetzung be-

schrieben in Z. Naturforsch. 31c, Seite 491, 1976) in 300 ml Glaskolben die Wirkstoffe, in Ethanol gelöst, in Mengen von 100, 75, 50, 20, 15, 7,5, 5 und 3 Teilen je Million Teile Nährlösung zugesetzt. Die Nährlösung enthält bei Versuchsbeginn ca. 5 x $10^7$ Synechococcus-Zellen/ml. Zur Erzielung optimaler Entwicklungsbedingungen für die Cyanobakterien werden die Versuchsansätze auf einem Schüttelgerät bei 27°C und einer Zusatzbeleuchtung von 1000 Lux aufgestellt. In Abständen von 24 Stunden wird in den Versuchsansätzen die Zellanzahl und damit diejenige Wirkstoffkonzentration ermittelt, bei welcher im Vergleich mit der Kontrolle (ohne Wirkstoff) eine signifikante Hemmung der Zellvermehrung eintritt.

| Wirkstoff | Angabe der Wirkstoffmenge in ... ppm, durch die das Wachstum von Synechococcus Stamm 6911 gehemmt wird |
|---|---|
| Farnesol | 3 |
| Geranyloxipropionitril | 7,5 |
| Farnesylacetat | 5 |
| Citronellol | 50 |
| cis-Dihydromyrcen | 20 |
| Geraniol | 10 |
| Methylgeraniat | 10 |
| Citral | 3 |
| Pseudoionon | 3 |
| Nerolidol | 7,5 |

Beispiel 2

Zur Ermittlung der mikroziden Wirksamkeit werden die Substanzen wie in Beispiel 1 beschrieben, einer synthetischen Nährlösung, die 5 x $10^7$ Zellen der Blaualge Synechococcus Stamm 6911 enthält, in Glaskolben in Mengen

von 50, 25, 10, 5 und 3 Teilen je Million Teile Nährlösung zugesetzt. Die Bebrütung der Versuchsansätze erfolgt bei 23°C. Nach einer Einwirkungsdauer von 8 Tagen wird der Versuch ausgewertet und die Wirksamkeit der Substanzen beurteilt:

- = Blaualgen abgetötet, abgestuft bis +++ = ungehemmtes Wachstum der Blaualgen (keine Wirksamkeit)

| Wirkstoff | Wirksamkeit gegen Synechococcus Stamm 6911 8 Tage nach Beimpfung der Versuchsansätze mit $5,5 \times 10^7$ Zellen/ml ... ppm Wirkstoffzugabe | | | | |
|---|---|---|---|---|---|
| | 50 | 25 | 10 | 5 | 3 |
| Geranyllinalool | - | - | - | - | +++ |
| Geranyloxypropionitril | - | + | + | ++ | ++ |
| Farnesol | - | - | - | ++ | ++ |
| Farnesylacetat | - | - | ++ | ++ | ++ |
| Farnesylaceton | - | - | - | +++ | +++ |
| Nerolidol | - | - | + | + | + |
| Kontrolle (unbehandelt) | +++ | | | | |

- = Blaualgen abgetötet, abgestuft bis +++ = ungehemmtes Wachstum der Blaualgen

## Patentansprüche

1. Mittel zur Bekämpfung von Blaualgen, enthaltend eine Verbindung der Formel

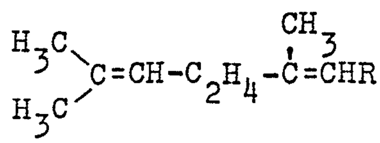

in der R einen Alkenylrest mit 3 bis 9 Kohlenstoffatomen bedeutet, der 1 bis 3 Doppelbindungen enthält und ein- bis dreifach durch einen Methylrest und durch eine Hydroxygruppe oder eine Acetylgruppe (-C=O) substituiert ist, oder die Derivate dieser
$CH_3$
Verbindung.

2. Verfahren zur Bekämpfung von Blaualgen, dadurch gekennzeichnet, daß man das Wasser, in dem die Blaualgen wachsen oder in dem das Wachstum von Blaualgen verhindert werden soll, behandelt mit einer Verbindung wie definiert in Anspruch 1.

3. Verfahren nach Anspruch 2, dadurch gekennzeichnet, daß man 3,7,11-Trimethyl-2,8,10-dodecatrien-1-ol, 3,7,11-Trimethyl-1,6,10-dodecatrien-3-ol oder 6,10,14-Trimethyl-5,9,13-pentadecatrien-2-on verwendet.

0065725

Europäisches Patentamt

## EUROPÄISCHER RECHERCHENBERICHT

Nummer der Anmeldung

EP 82 10 4262

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | GB-A-1 567 819 (KURARAY) * Seite 7, Zeilen 21-23; Ansprüche * --- | 1-3 | A 01 N 49/00 |
| Y | GB-A- 989 554 (P. SCHMIALEK) * Ansprüche * --- | 1-3 | |
| P,Y | PATENTS ABSTRACTS OF JAPAN, Band 5, Nr. 140(C-70)(812), 4. September 1981, & JP - A - 56 73005 (KURARAY) 17-06-1981 * Zusammenfassung * ----- | 1-3 | |

| RECHERCHIERTE SACHGEBIETE (Int. Cl. 3) |
|---|
| A 01 N 49/00 |

Der vorliegende Recherchenbericht wurde für alle Patentansprüche erstellt.

| Recherchenort | Abschlußdatum der Recherche | Prüfer |
|---|---|---|
| DEN HAAG | 11-08-1982 | DELHOMME H.A. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82